Europäisches Patentamt

(19) European Patent Office

Office européen des brevets

(11) Numéro de publication: **0 069 755**
**B1**

(12) **FASCICULE DE BREVET EUROPEEN**

(45) Date de publication du fascicule du brevet:
**27.08.86**

(21) Numéro de dépôt: **82900317.7**

(22) Date de dépôt: **18.01.82**

(86) Numéro de dépôt international:
**PCT/RO 82/00001**

(87) Numéro de publication internationale:
**WO 82/02602 (05.08.82 Gazette 82/19)**

(51) Int. Cl.⁴: **G 01 P 15/09, H 01 L 41/04**

(54) **CAPTEUR PIEZO-ELECTRIQUE.**

(30) Priorité: **20.01.81 RO 103157**

(43) Date de publication de la demande:
**19.01.83 Bulletin 83/3**

(45) Mention de la délivrance du brevet:
**27.08.86 Bulletin 86/35**

(84) Etats contractants désignés:
**CH DE FR GB LI**

(56) Documents cités:
**EP - A - 0 016 858**

**W. GHOLKE "Einführung in die piezo-elektrische Messtechnik", 2. Auflage, 1959 AKADEMISCHE VERLAGSANSTALT, Leipzig, pages 119-127**
**J.TICHY, G.GAUTSCHI "Piezoelektrische Messtechnik", 1980 SPRINGER VERLAG, Berlin-Heidelberg-New York, pages 197-217**

(73) Titulaire: **INSTITUTUL DE CERCETARE STIINTIFICA SI INGINERIE TEHNOLOGICA PENTRU INDUSTRIA ELECTROTEHNICA -I.C.P.E., B-dul Tudor Vladimirescu nr. 45-47 Sectorul 5, Bucuresti, Cod 76, 134 (RO)**

(72) Inventeur: **GHIUREA, Florin Constantin V. Str.Serg.Gh.Iorga, nr.3 Cod 76.504 Blocul 59-.A Scara 1, Etajul 1, Apartamentul 9 Sectorul 5 Bucuresti (RO)**

(74) Mandataire: **Chauchard, Robert et al, c/o Cabinet Malémont 42, avenue du Président Wilson, F-75116 Paris (FR)**

ACTORUM AG

## Description

La présente invention concerne un capteur piézo-électrique axial pour mesurer des accélérations, muni d'une masse séismique cylindrique. On connaît diverses formes constructives de capteurs axials piézo-électriques, appartenant à la classe des accéléromètres, qui en général sont formés d'un boîtier cylindrique à l'intérieur duquel se trouve une masse seismique qui à cause de son mouvement vibratoire (le capteur lui aussi est en mouvement vibratoire, son boîtier étant fixé rigidement sur la pièce dont les vibrations doivent être perçues) et à cause de la tendance à l'inertie de la masse séismique qui veut garder son état et son sens de mouvement, exerce une pression pulsatoire sur un disque ou sur un paquet de disques piézo-électriques ayant pour but de réaliser une transformation linéaire des impulsions pulsatoires de la masse séismique en impulsions de la tension électrique générée par le piézo-élément. De tels capteurs sont décrits par exemple dans le document EP-A-0 016 858, ainsi que dans le chapitre 11 du livre de TYCHY et GAUT-SCHY intitulé «Piezoelektrische Messtechnik».

Les inconvénients de ces capteurs sont les suivants:

– la masse inactive du capteur qui en très grande partie provient de son boîtier, qui dans le cas des capteurs déjà connus, est plus grande que la masse séismique (qui représente l'élément actif), modifie les caractéristiques du mouvement vibratoire, qui doit être perçu, surtout dans le cas de pièces ayant des dimensions réduites, par l'agrandissement exagéré du poids de la pièce étudiée, auquel s'ajoute la masse inactive du boîtier du capteur; la fréquence et l'amplitude des vibrations dépendent aussi dans ce cas, de la masse de l'élément en mouvement;

– pour diminuer le rapport entre la masse inactive du capteur (c'est-à-dire du boîtier) et sa masse active (c'est-à-dire la masse séismique), la masse séismique est réalisée en métaux rares, ayant un prix élevé, tels le wolfram, l'osmium, l'irridium, qui à cause de leur grande densité, rendent possible la diminution du poids du boîtier, en réduisant le volume de la pièce séismique qu'il contient.

Le capteur piézo-électrique réalisé conformément à l'invention, remédie aux inconvénients susmentionnés par le fait que ladite masse séismique est réalisée en forme de boîtier délimitant extérieurement le capteur et comporte un tronçon fileté à une extrémité.

De préférence, le capteur comprend un pivot de contact, muni d'un disque d'appui, coopérant avec deux bagues piézo-électriques assemblées avec les faces ayant la même polarité sur un disque intermédiaire d'un boulon de contact, fixé par une douille isolante sur le boîtier.

Grâce à cette disposition, le poids du capteur se trouve diminué par rapport au poids de la masse séismique qui est son élément actif. De plus, on évite ainsi la modification des vibrations qui doivent être perçues par l'agrandissement du poids des pièces qui vibrent, auquel on ajoute la masse parasitaire inactive, telle que celle du boîtier.

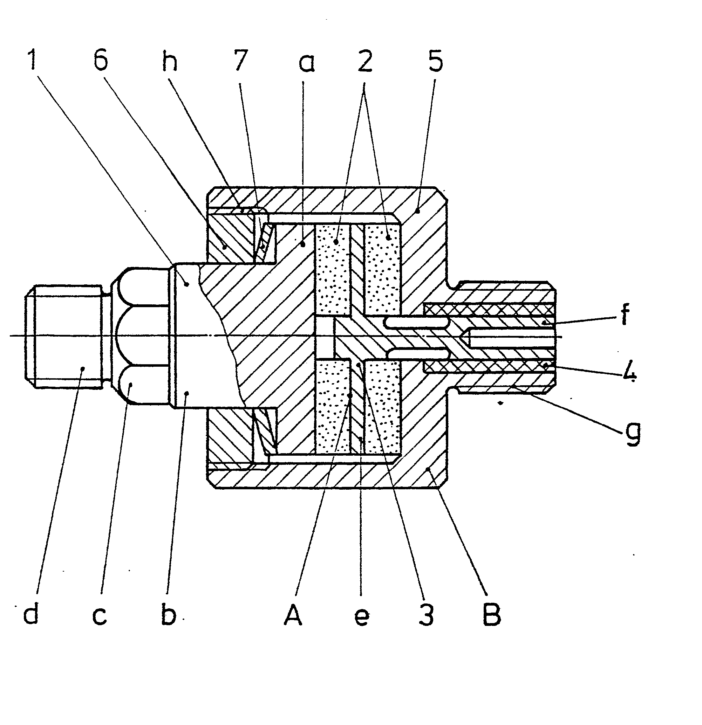

Un exemple de réalisation du capteur axial piézo-électrique réalisé conformément à l'invention est décrit ci-après en référence au dessin annexé dans lequel la figure unique représente une vue en coupe longitudinale de ce capteur.

Le capteur piézo-électrique est formé d'un pivot de contact 1, qui est formé d'un disque d'appui a solidaire d'un cylindre de liaison b qui se continue avec un hexagone de clé c muni à une extrémité d'un tronçon fileté d ayant pour rôle de fixer le capteur sur la pièce qu'on n'a pas dessinée et dont les vibrations doivent être détectées.

Sur le disque d'appui a du pivot de contact 1 sont placés un ou plusieurs éléments sensoriels A, formés d'une paire de bagues piézo-électriques 2 placées avec les faces ayant la même polarité vers un disque intermédiaire e d'un boulon de contact 3, muni d'un tronçon terminal f qui est l'un des deux poles du capteur.

Le boulon de contact 3 est immobilisé à l'aide d'une douille isolante 4 à masse séismique B qui est réalisée en forme de boîtier, formé d'une pièce cylindrique 5 muni à une extrémité d'un tronçon fileté g qui forme le second pôle et qui rend possible le raccordement du capteur, par un manchon qu'on n'a pas dessiné, au cordon de transmission des impulsions électriques générées par les bagues piézo-électriques 2. A l'autre extrémité, la pièce cylindrique 5 de la masse séismique B est munie d'un filet intérieur h où est introduit un bouchon d'étanchéité 6, qui entoure le pivot de contact 1. A l'intérieur du boîtier qui joue le rôle de masse séismique B se trouve un ressort en forme de bague sous tension 7, qui peut avoir la forme d'un disque qui doit resserrer le paquet d'éléments détecteurs A entre le disque d'appui a du pivot de contact 1 et la masse séismique B.

Le capteur piézo-électrique réalisé conformément à l'invention présente les avantages suivants:

– construction simple, bon-marché et facile à réaliser et ayant des performances supérieures;

– le poids du capteur se réduit à environ le poids de la masse séismique, qui est l'élément actif, évitant la dénaturation des vibrations qui doivent être déterminées;

– ce type de capteur permet la réalisation des capteurs piézo-électriques appartenant à la classe des accéléromètres, à grande efficacité, à performances supérieures, sans employer des alliages de métaux chers et rares ayant une grande densité, comme par exemple le wolfram, l'irri-dium, l'osmium, etc. . . .

## Revendications

1. Capteur piézo-électrique axial pour mesurer des accélérations, muni d'une masse séismique cylindrique, caractérisé en ce que ladite masse séismique est réalisée en forme de boîtier délimitant extérieurement le capteur et comporte un tronçon fileté (g) à une extrémité.

2. Capteur, selon la revendication 1, caractérisé en ce qu'il comprend un pivot de contact (1), muni d'un disque d'appui (a), coopérant avec deux bagues piézo-électriques (2) assemblées avec les faces ayant la même polarité sur un disque intermédiaire (e) d'un boulon de contact (3), fixé par une douille isolante (4) sur le boîtier (B).

## Claims

1. Axial piezoelectric sensor for acceleration measurement, provided with a cylindrical seismic mass, characterized in that said seismic mass is shaped as a casing externally bounding the sensor and comprises a threaded portion (g) at one end.

2. Sensor according to claim 1, characterized in that it comprises a contact pin (1), formed with a pressing disk (a) which cooperates with a pair of piezoelectric rings (2) joined, with the faces of the same polarity, on an intermediary disk (e) of a contact bolt (3) which is fastened to the casing (B) through an isolating bushing (4).

## Patentansprüche

1. Axialer piezoelektrischer Sensor für Beschleunigungsmessungen, mit einer zylindrischen seismischen Masse, dadurch gekennzeichnet, dass diese seismische Masse als ein den Sensor äusserlich begrenzendes Gehäuse ausgebildet ist und an einem Ende mit einem Gewinde (g) vorgesehen ist.

2. Sensor nach Anspruch 1, dadurch gekennzeichnet, dass er einen Kontaktzapfen (1) aufweist, der mit einer Abstützscheibe (a) vorgesehen ist, welche mit zwei durch die Flächen gleicher Polarität, auf einer Zwischenscheibe (e) eines Kontaktbolzens (3) zusammengesetzten piezoelektrischen Ringe (2) zusammenwirkt, wobei dieser Kontaktbolzen durch eine Isolierhülse (4) am Gehäuse (B) befestigt ist.